# EUROPÄISCHE PATENTSCHRIFT

(11) **EP 3 440 729 B1**
(45) Veröffentlichungstag und Bekanntmachung des Hinweises auf die Patenterteilung: **17.02.2021**
(21) Anmeldenummer: 17730358.3
(22) Anmeldetag: 03.04.2017
(51) Int. Cl.: H01M 8/18

(54) **ZELLE UND ZELLSTACK EINER REDOX-FLOW-BATTERIE UND VERFAHREN ZUR HERSTELLUNG DIESES ZELLSTACKS**
CELL AND CELL STACK OF A REDOX FLOW BATTERY, AND METHOD FOR PRODUCING SAID CELL STACK
ÉLÉMENT ET EMPILEMENT D'ÉLÉMENTS D'UNE BATTERIE À FLUX REDOX ET PROCÉDÉ DE FABRICATION DE CET EMPILEMENT D'ÉLÉMENTS

(30) Priorität: 04.04.2016 DE 102016004027
(43) Veröffentlichungstag der Anmeldung: 13.02.2019
(73) Patentinhaber: VoltStorage GmbH, 82140 Olching (DE)
(72) Erfinder: BITNER, Jakob, 95447 Bayreuth (DE); KIEFL, Felix, 81371 München (DE); PEITHER, Michael, 81675 München (DE)
(74) Vertreter: Sommer, Andrea
(86) Internationale Anmeldenummer: PCT/DE2017/000088
(87) Internationale Veröffentlichungsnummer: WO 2017/174053

(56) Entgegenhaltungen:
- WO-A1-94/09526
- DE-A1-102013 107 516
- DE-A1-102014 103 292

## Beschreibung

Die Erfindung betrifft eine Zelle einer Redox-Flow-Batterie, mit wenigstens zwei Zellrahmenelementen, einer Membran und zwei Elektroden, wobei die wenigstens zwei Zellrahmenelemente, die Membran und die zwei Elektroden zwei voneinander getrennte Zellinnenräume abschließen, wobei in den wenigstens zwei Zellrahmenelemente wenigstens vier separate Kanäle so vorgesehen sind, dass die beiden Zellinnenräume von unterschiedlichen Elektrolytlösungen durchströmt werden können, und wobei die Zelle mit Ausnahme der wenigstens vier separaten Kanäle flüssigkeitsdicht ausgebildet ist. Ferner betrifft die Erfindung einen Zellstack einer Redox-Flow-Batterie mit wenigstens einer solchen Zelle.

Redox-Flow-Batterien sind bereits in verschiedenen Ausführungen bekannt. Solche Ausführungen sind beispielhaft in der AT 510 250 A1 und der US 2004/0170893 A1 beschrieben. Ein wichtiger Vorteil der Redox-Flow-Batterien liegt in ihrer Eignung, sehr große Mengen an elektrischer Energie speichern zu können. Die Energie wird dabei in Elektrolyten gespeichert, die platzsparend in sehr großen Tanks bereitgehalten werden können. Die Elektrolyte weisen meist metallische Ionen unterschiedlicher Oxidationsstufen auf. Zur Entnahme von elektrischer Energie aus den Elektrolyten oder zum Wiederaufladen derselben werden die Elektrolyte durch eine sogenannte elektrochemische Zelle gepumpt. Im Folgenden wird der Einfachheit halber anstelle des Begriffs elektrochemische Zelle lediglich der Begriff Zelle verwendet.

Die Zelle wird dabei aus zwei Halbzellen gebildet, die über eine Membran voneinander getrennt sind und jeweils einen Zellinnenraum, einen Elektrolyt und eine Elektrode umfassen. Die Membran ist semipermeabel und hat die Aufgabe, Kathode und Anode einer elektrochemischen Zelle räumlich und elektrisch voneinander zu trennen. Dazu muss die Membran für bestimmte Ionen durchlässig sein, welche die Umwandlung der gespeicherten chemischen Energie in elektrische Energie bewirken. Membrane können beispielsweise aus mikroporösen Kunststoffen oder Polyethylen gebildet werden. An beiden Elektroden der Zelle, also an der Anode und an der Kathode, laufen Redox-Reaktionen ab, wobei von den Elektrolyten an einer Elektrode Elektronen freigesetzt und an der anderen Elektrode Elektronen aufgenommen werden. Die metallischen und/oder nichtmetallischen Ionen der Elektrolyte bilden Redox-Paare und erzeugen folglich ein Redox-Potential. Als Redox-Paare kommen beispielsweise Eisen-Chrom, Polysulfid-Bromid, Vanadium oder andere Schwermetalle in Frage. Diese oder auch andere Redox-Paare können grundsätzlich in wässriger oder nicht wässriger Lösung vorliegen.

Die Elektroden einer Zelle, zwischen denen sich infolge der Redoxpotentiale eine Potentialdifferenz ausbildet, sind außerhalb der Zelle, z. B. über einen elektrischen Verbraucher, elektrisch miteinander verbunden. Während die Elektronen außerhalb der Zelle von einer Halbzelle zur anderen gelangen, treten Ionen der Elektrolyte durch die Membran direkt von einer Halbzelle zur anderen Halbzelle über. Zum Wiederaufladen der Redox-Flow-Batterie kann an die Elektroden der Halbzellen anstelle des elektrischen Verbrauchers, beispielsweise mittels eines Ladegeräts, eine Potentialdifferenz angelegt werden, durch welche die an den Elektroden der Halbzellen ablaufenden Redox-Reaktionen umgekehrt werden.

Zur Bildung der beschriebenen Zelle werden Zellrahmen verwendet, die einen Zellinnenraum umlaufend umschließen. Jede Halbzelle umfasst dabei einen derartigen Zellrahmen, der meist im Spritzgussverfahren aus einem thermoplastischen Kunststoff hergestellt wird. Zwischen zwei Zellrahmen wird die Membran angeordnet, die Elektrolyte der Halbzellen in Bezug auf einen konvektiven Stoffaustausch voneinander trennt, eine Diffusion bestimmter Ionen von einer Halbzelle in die andere Halbzelle aber zulässt. Den Zellinnenräumen wird zudem jeweils eine Elektrode derart zugeordnet, dass diese mit den die Zellinnenräume durchströmenden Elektrolyten in Kontakt stehen. Die Elektroden können beispielsweise den Zellinnenraum eines jeden Zellrahmens auf der der Membran abgewandten Seite abschließen. Jeder Zellrahmen weist Öffnungen und Kanäle auf, durch welche der entsprechende Elektrolyt von einer Versorgungsleitung in den jeweiligen Zellinnenraum strömen und von dort wieder abgezogen sowie einer Entsorgungsleitung zugeführt werden kann. Die Elektrolyte der Halbzellen werden dabei über die Versorgungsleitung und die Entsorgungsleitung von einem Vorlagebehälter in einen Sammelbehälter umgepumpt. Dies erlaubt eine erneute Verwendung der Elektrolyte, die folglich weder verworfen noch ersetzt werden müssen.

Bedarfsweise wird eine Mehrzahl gleichartiger Zellen in einer Redox-Flow-Batterie zusammengefasst. Meist werden die Zellen dazu aufeinandergestapelt, weshalb man die Gesamtheit der Zellen auch als Zellstapel oder Zellstack bezeichnet. Die einzelnen Zellen werden meist parallel zueinander von den Elektrolyten durchströmt, während die Zellen meist elektrisch hintereinander geschaltet werden. Die Zellen sind also meist hydraulisch parallel und elektrisch in Reihe geschaltet. In diesem Fall ist der Ladungszustand der Elektrolyte in jeweils einer der Halbzellen des Zellstapels gleich.

Zur Verteilung der Elektrolyte auf die entsprechenden Halbzellen des Zellstacks und zur gemeinsamen Abführung der Elektrolyte aus den jeweiligen Halbzellen sind Halbzellen untereinander mit Kanälen verbunden. Da jede Halbzelle bzw. jeder Zellinnenraum einer Zelle von einem anderen Elektrolyt durchströmt wird, müssen die beiden Elektrolyte während des Durchtritts durch den Zellstack voneinander getrennt werden. In den Zellrahmen bzw. Zellrahmenelementen sind dazu in der Regel vier Bohrungen vorgesehen, die in jedem Zellrahmenelement und/oder im Zellstack einen Kanal senkecht zur jeweiligen Zelle, zum jeweiligen Zellinnenraum und/oder längs des Zellstacks bilden. Jeweils zwei der Kanäle dienen dem Transport eines Elektrolyten. Dabei wird über einen Kanal der Elektrolyt zum Zellinnenraum zugeführt, während über den anderen Kanal der Elektrolyt aus dem Zellinnenraum abgeführt wird. In jeder Halbzelle zweigen daher von zwei Kanälen Verteilungskanäle ab, die mit dem Zellinnenraum verbunden sind, um so das Zuführen und Abführen von Elektrolyten zu den Halbzellen bzw. das Durchströmen der Zellinnenräume mit Elektrolyten zu ermöglichen.

Damit die Zellen und bedarfsweise die Stacks flüssigkeitsdicht sind, werden die entsprechenden Zellrahmen und bedarfsweise zusätzlich die entsprechenden Elektroden und Membrane aufeinander gepresst, wobei ein Kontakt zwischen bestimmten Elektrolyten und bestimmten Elektroden vermieden werden muss. Zur Abdichtung der Kanäle und/oder Zellinnenräume werden meist Dichtungen etwa in Form von O-Ringen, Flachdichtungen, aufgespritzten Dichtungen oder dergleichen verwendet. Um die Flüssigkeitsdichtheit der Zellen bzw. Zellstacks sicherstellen zu können, müssen recht hohe Flächenpressungen an den Dichtungen bereitgestellt werden. Deshalb werden die Zellen bzw. Zellstacks in eine Verspanneinrichtung zwischen endständigen Verspannplatten eingebracht, die über seitlich längs zum Zellstack verlaufende Zugstangen gegen die Zelle bzw. den Zellstack gepresst werden.

Eine weitere Option ist es, die Flüssigkeitsdichtheit durch das umlaufende Verschweißen mehrerer Zellrahmen zu erreichen. Die Schweißnähte dichten dabei den Spalt zwischen den Zellrahmen, der Elektrode(n) und/oder der Membran(e) dauerhaft und untrennbar ab. Dabei wird ein Kunststoffschweißverfahren angewendet und ist beispielhaft in DE 10 2013 107 516 A1 beschrieben.

Bekannte Redox-Flow-Zellstacks sind aufgrund der Verspanneinrichtung und der vielen Dichtungen sehr komplex in der Herstellung, da verschiedene Arbeitsschritte für den Zusammenbau notwendig sind. Auch das oben bezeichnete Schweißverfahren bringt viele unterschiedliche zeitintensive Schweißvorgänge mit sich und bindet kostspielige Produktionseinrichtungen (z.B. Schweißroboter) über einen längeren Zeitraum. All dies stellt einen hohen Kostenfaktor in der Zellstackproduktion dar. Auch ist der Zeitfaktor der Stackproduktion entscheidend und beeinflusst die Produktionskapazität.

Der vorliegenden Erfindung liegt daher die Aufgabe zugrunde, eine Zelle und einen Zellstack jeweils der eingangs genannten und zuvor näher beschriebenen Art vorzuschlagen, die Redox-Flow-Batterien mit geringeren Herstellkosten ermöglichen. Zusätzlich soll die Zeit drastisch verkürzt werden, die ein Stack an Produktionseinrichtungen zu dessen Herstellung bindet um die Produktionskapazität zu erhöhen.

Diese Aufgabe wird bei einer Zelle nach dem Oberbegriff von Anspruch 1 dadurch gelöst, dass wenigstens die wenigstens zwei Zellrahmenelemente mit der Membran, den beiden Elektroden und/oder mit wenigstens einem weiteren Zellrahmenelement mit einem flüssigen Kunststoff umgossen ist und durch Aushärtung des Kunststoffs dauerhaft flüssigkeitsdicht gefügt ist. Dabei werden die zu umgießenden Bauteile zusammengesetzt, also alle benötigten Zellrahmenelemente, Elektroden und/oder Membrane in der vorgesehenen Reihenfolge aufeinander gestapelt und anschließend innerhalb eines nach oben hin offenen Gussgehäuses platziert und temporär durch eine Einrichtung verspannt. Die Zellrahmenelemente, Elektroden und Membrane sind dabei so ausgeprägt, dass vorzugsweise alle Komponenten in den Spalt zwischen Gussgehäuse und den zu umgießenden Bauteilen hineinragen. Der Spalt zwischen Gussgehäuse und den zu umgießenden Bauteilen wird mit einem flüssigen Kunststoff aufgefüllt, so dass das die zu umgießenden Bauteile, also die wenigstens zwei Zellrahmenelemente mit der Membran, den beiden Elektroden und/oder mit wenigstens einem weiteren Zellrahmenelement von dem flüssigen Kunststoff eingeschlossen und gefügt werden. Das flüssige Plastik wird durch aushärten mittels chemischen Härters, durch Erwärmung und/oder Kühlung in einen dauerhaft festen Zustand überführt und fügt so die umgossenen Elemente untereinander, sowie mit dem Gussgehäuse dauerhaft zusammen. Alle Zellinnenräume und Versorgungskanäle werden somit durch die umgossenen Zellrahmenelente flüssigkeitsdicht nach außen und zu anderen Zellinnenräumen abgeschlossen. Nach dem vollständigen aushärten des Gussmediums kann die temporäre Verspanneinrichtung anschließend wieder entfernt und zur weiteren Verwendung der Produktion wieder zugeführt werden.

Die zuvor genannte Aufgabe ist zudem gemäß Anspruch 7 durch einen Zellstack mit wenigstens einer solchen Zelle gelöst.

Die Erfindung hat erkannt, dass durch das Vergießen der wenigstens zwei Zellrahmenelemente mit der Membran, den beiden Elektroden und/oder mit wenigstens einem weiteren Zellrahmenelement, auf eine Verspanneinrichtung zum Verpressen der Zellen bzw. Zellstacks und Dichtungen verzichtet werden kann. Dadurch ist nämlich die Zelle bzw. der Zellstack dauerhaft flüssigkeitsdicht und nicht von der Korrosion der Dichtungen oder der Alterung der Verspanneinrichtung abhängig. Dadurch entsteht kein Wartungsaufwand an der Verspanneinrichtung. Außerdem besteht gegenüber dem Zusammenschweißen von Zellrahmen eine höhere Sicherheit und einfachere Qualitätskontrolle gegenüber Flüssigkeitsaustritt, da die Flüssigkeitsdichtheit der Schweißnähte einzeln überprüft werden müssen.

Grundsätzlich kann erfindungsgemäß auch wenigstens zwei Zellrahmenelemente mit einer Membran, einer Elektrode und/oder wenigstens einem weiteren Zellrahmenelement verpresst oder anderweitig verbunden werden, um eine ausreichende Dichtheit zu erzielen. Ob und wie dies geschieht, kann abhängig vom Einzelfall festgelegt werden. Es erfolgt aber in jedem Fall ein teilweises vergießen wie zuvor beschrieben, und zwar insbesondere zwischen den Bauteilen der Zelle, wo das Zusammenpressen derselben zu besonderen Nachteilen führt. Bei der Membran kann es sich vorzugsweise um eine semipermeable Membran, eine ionenleitende Membran und/oder eine poröse Membran handeln.

Im Übrigen handelt es sich bei den Elektroden vorzugsweise um bipolare Platten. Die Elektroden grenzen an wenigstens einen Zellinnenraum, vorzugsweise auf beiden Seiten an Zellinnenräume unterschiedlicher Halbzellen oder Zellen, wenn ein Zellstack mit in Reihe verschalteten Zellen vorgesehen ist, an, wobei die Elektrode die wenigstens eine Halbzelle bzw. wenigstens den entsprechenden Zellinnenraum zu einer Seite abschließt. Die Membran schließt auf beiden Seiten jeweils eine Halbzelle bzw. einen Zellinnenraum der Zelle ab. Im Falle eines Zellstacks umfasst dieser vorzugsweise wenigstens zwei Zellen.

Wenn im Zusammenhang mit der Erfindung von einem Vergießen die Rede ist, so ist dabei vorzugsweise das umgießen von allen Zellelementen mit einem flüssigen Kunststoff in einer Form, die gleichzeitig das Außengehäuse des Stacks bildet, gemeint. Durch das Aushärten des flüssigen Kunststoffs werden alle Stackelemente in einem einzigen Arbeitsschritt flüssigkeitsdicht gefügt.

Bei dem flüssigen Kunststoff handelt es sich vorzugsweise um härtbare Kunstharze, die eine Epoxidgruppe beinhalten und daher auch als Epoxidharze bezeichnet werden. Diese sind kostengünstig einsetzbar, da sie bei Zimmertemperatur flüssig verarbeitbar sind und danach chemisch zu einem Duroplast aushärten. Der chemische Härter ist dabei im Gussmedium bereits enthalten. Das Aushärten kann bei Zimmertemperatur erfolgen oder durch Erhitzen beschleunigt werden. Außerdem sind diese Harze im gehärteten Zustand chemikalienresistent, besitzen einen hohen elektrischen Widerstand, trennen elektrische Teile mit unterschiedlichen Spannungsniveaus galvanisch und sind damit in der Redox-Flow-Batterie Anwendung einsetzbar.

Das Gussmedium, bestehend aus einer Mischung aus chemischem Härter und Epoxidharz soll dabei im flüssigen Zustand eine niedrige Viskosität haben um in alle Öffnungen fließen zu können und damit Oberflächenunebenheiten der Zellrahmen auszugleichen, um alle Stellen abdichten zu können. Auf der anderen Seite darf das das flüssige Gussmedium nicht zu niedrig Viskos sein, um zu verhindern, dass das Gussmedium in aufgrund von mikroskopischer Unebenheiten der Zellrahmen vom äußeren Gussbereich in den Zellinnenraum dringt und damit die Funktion der Zelle und/oder des Zellstacks beeinflusst. Dabei hat sich eine Viskosität des Gussmediums von mindestens 5,0 · 10³ *mPa* · *s* und höchstens 9,0 · 10³ *mPa · s* als problemlos anwendbar erwiesen.

Die Vergießbarkeit kann weiter gesteigert werden, wenn der Kunststoff der Zellrahmenelemente ein nicht-polyolefiner Kunststoff ist. Aus Gründen der mechanischen Haftungseigenschaften des Gießkunststoffes handelt es sich bei dem Thermoplasten vorzugsweise um Polyvinylchlorid (PVC), Polyamid (PA), Polyphenylensulfid (PPS) und/oder Polyetheretherketon (PEEK). Weiterhin können auch polyolefine Thermoplaste mit geringeren Haftungskräften eingesetzt werden wie etwa Polyethylen (PE) und/oder Polypropylen (PP).

Um eine höhere Stabilität des gesamten Zellstacks zu erreichen ist das Außengehäuse ebenfalls vorzugsweise aus einem nicht-polyolefinen Kunststoff wie etwa Polyvinylchlorid (PVC), Polyamid (PA), Polyphenylensulfid (PPS) und/oder Polyetheretherketon (PEEK) gefertigt.

Um die Elektrode einfach eingießen zu können, bietet es sich an, wenn die Elektrode wenigstens teilweise aus wenigstens einem Kunststoff, insbesondere aus wenigstens einem Thermoplasten, vorzugsweise einem nicht polyolefinen Kunststoff wie Polyvinylchlorid (PVC), Polyamid (PA), Polyphenylensulfid (PPS) und/oder Polyetheretherketon (PEEK) gebildet wird. Weiter besteht die Elektrode vorzugsweise aus einem Verbund aus einem Kunststoff und leitfähigen Partikeln, vorzugsweise in Form von Kohlenstoff, Graphit, Ruß, Titancarbid (TiC) und/oder wenigstens einer Metallverbindung.

Die Zellrahmen sind dabei so ausgeprägt, dass bei einem Eingießen die Flüssigkeitsdichtheit von einem Halbzelleninnenraum zu einem anderen gewahrleistet ist. Dazu sind in jedem Zellrahmenelement zwei Bohrungen für die senkrecht zum Zellrahmenelement verlaufenden Versorgungsleitungen vorgesehen, die den Halbzellinnenraum mit Elektrolyt versorgen. Weiterhin sind die Zellrahmen ausgeprägt, um den Abstand zum nächsten Zellrahmen, der eine gleichartig gepolte Halbzelle umschließt, mit Kanälen zu überbrücken, um die Versorgung der Zellinnenräume mit zwei verschiedenen Elektrolyten zu ermöglichen. Erfindungsgemäß werden diese Kanäle als fluchtende Bohrungen und/oder Ausbuchtungen ausgeführt und liegen abgesetzt und/oder außerhalb vom Hauptkörper des Zellstacks, um einen vollständigen Einschluss aller aufeinandertreffenden Flächen der Zellrahmenelemente durch das Gussmedium zu ermöglichen.

Jeder Zellrahmen weist Öffnungen und Kanäle auf, durch welche der entsprechende Elektrolyt von einer Versorgungsleitung in den jeweiligen Zellinnenraum strömen und von dort wieder abgezogen sowie einer Entsorgungsleitung zugeführt werden kann. Die Elektrolyte der Halbzellen werden dabei über die Versorgungsleitung und die Entsorgungsleitung von einem Vorlagebehälter in einen Sammelbehälter umgepumpt. Dies erlaubt eine erneute Verwendung der Elektrolyte, die folglich weder verworfen noch ersetzt werden müssen.

Grundsätzlich können eine unbegrenzte Anzahl an Zellen und damit Zellrahmenelemente eingegossen werden. Auch können mehrere Zellrahmenelemente genutzt werden um eine Halbzelle aufzubauen.

Alternativ können auch Baugruppen aus einzelnen Komponenten, wie etwa Zellrahmen, Membrane und/oder Elektroden mit weiteren Komponenten und/oder Baugruppen eingegossen werden. Diese Baugruppen werden vornehmlich vor dem Zusammensetzten in der Gussform gefertigt. Die einzelnen Komponenten der Baugruppen können auch anderweitig gefügt werden, beispielsweise durch Verpressen oder Verschweißen. Die Baugruppen werden jedoch anschließend flüssigkeitsdicht umgossen.

Zum einfachen Aufbau eines Zellstacks bietet es sich an, dass alle Zellen des Zellstacks gleichartig und symmetrisch aufgebaut.

Nachfolgend wird die Erfindung anhand einer lediglich Ausführungsbeispiele darstellenden Zeichnung näher erläutert. In der Zeichnung zeigt:
Fig. 1 einen aus dem Stand der Technik bekannten Zellstack einer Redox-Flow-Batterie in einer seitlichen Schnittansicht,
Fig. 2 eine Detaildarstellung des Zellstacks aus Fig. 1,
Fig. 3 ein Zellrahmenelement des Zellstacks aus Fig. 1 in Draufsicht,
Fig. 4 einen ersten erfindungsgemäßen Zellstack in einer seitlichen Schnittansicht,
Fig. 5 eine Detaildarstellung des Zellstacks aus Fig. 4,
Fig. 6 ein erstes Zellrahmenelement der Zelle von Fig. 4 in einer Draufsicht,
Fig. 7 das Zellrahmenelement von Fig. 6 in einer Seitenansicht,
Fig. 8 ein zweites Zellrahmenelement der Zelle von Fig. 4 in einer Draufsicht,
Fig. 9 den Zellstack aus Fig 4 in einer Draufsicht,
Fig. 10 eine Detaildarstellung des Zellstacks aus Fig. 9,

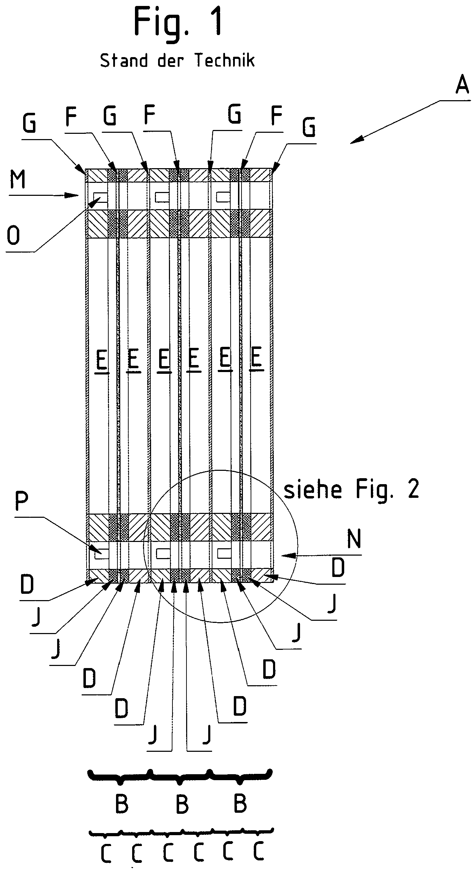

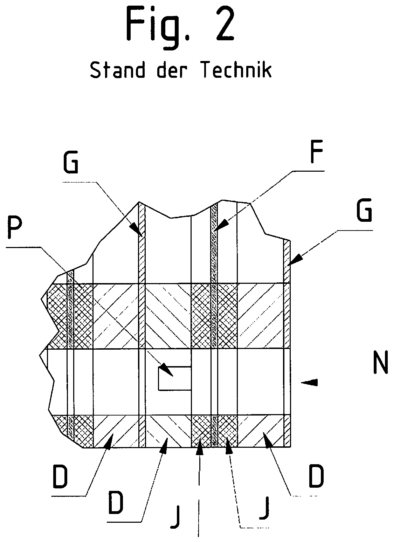

In den Fig. 1 und Fig. 2 ist ein Zellstack A, also ein Zellstapel einer aus dem Stand der Technik bekannten und eingangs näher beschriebenen Redox-Flow-Batterie in einem Längsschnitt dargestellt. Der Zellstack A umfasst drei Zellen B, die jeweils zwei Halbzellen C mit korrespondierenden Elektrolyten aufweisen. Jede Halbzelle C weist ein Zellrahmenelement D auf, das einen Zellinnenraum E umfasst, durch den ein in einem Vorlagebehälter bevorrateter Elektrolyt hindurchgeleitet werden kann. Der Zellinnenraum E ist angrenzend zum Zellrahmenelement D der zweiten Halbzelle C durch eine zwischen den Zellrahmenelementen D der beiden Halbzellen C vorgesehenen, semipermeablen Membran F verschlossen. An der anderen Stirnseite der Zellrahmenelemente D sind die Halbzellen durch Elektroden G verschlossen. Die Elektroden G verschließen zudem die Zellinnenräume E angrenzend zur nächsten Zelle B.

Die Elektrode G liegt bei dem dargestellten Zellstack A flächig auf einer Außenseite H des Zellrahmens D auf. Die Elektrode G und die Stirnseiten der Zellrahmenelemente D liegen an gegenüberliegenden Seiten an der Elektrode G an. Zwischen den anderen Stirnseiten der Zellrahmenelemente D einer Zelle B befindet sich ein Dichtmaterial J, in dem die Membran F dichtend aufgenommen ist.

Längs zum Zellstack A erstrecken sich bei der dargestellten Redox-Flow-Batterie vier Kanäle zum Zuführen und Abführen von Elektrolyt. Von zwei Kanälen zweigen in jeweils einer Halbzelle C jeder Zelle B Verteilungskanäle O ab, über die der Elektrolyt dem entsprechenden Zellinnenraum E der Halbzelle C zugeführt werden kann. An gegenüberliegenden Abschnitten der entsprechenden Zellrahmen D sind Verteilungskanäle P vorgesehen, über die der Elektrolyt abgeleitet werden kann.

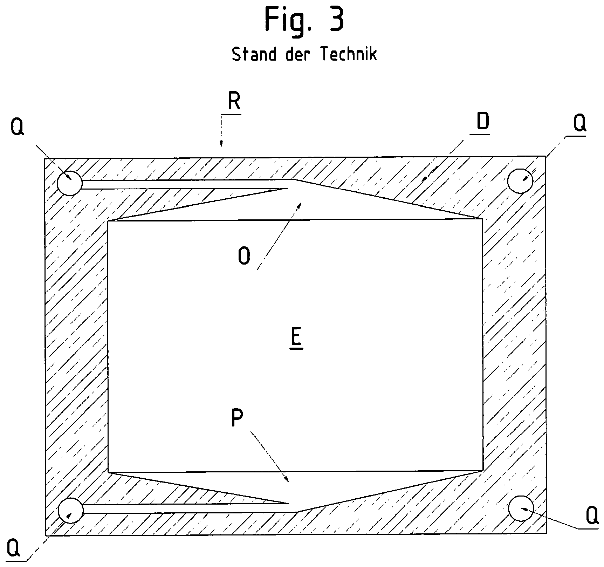

In der Fig. 3 ist eine Draufsicht auf ein Zellrahmenelement D des Zellstacks aus Fig. 1 dargestellt. In den Ecken des Zellrahmens D sind vier Bohrungen Q vorgesehen, von denen jede Bohrung ein Teil eines Kanals für die Elektrolyte bildet. Die verzweigten Verteilungskanäle O, P sind als Vertiefungen in den um den Zellinnenraum E umlaufenden Rahmens R des Zellrahmenelements D eingelassen.

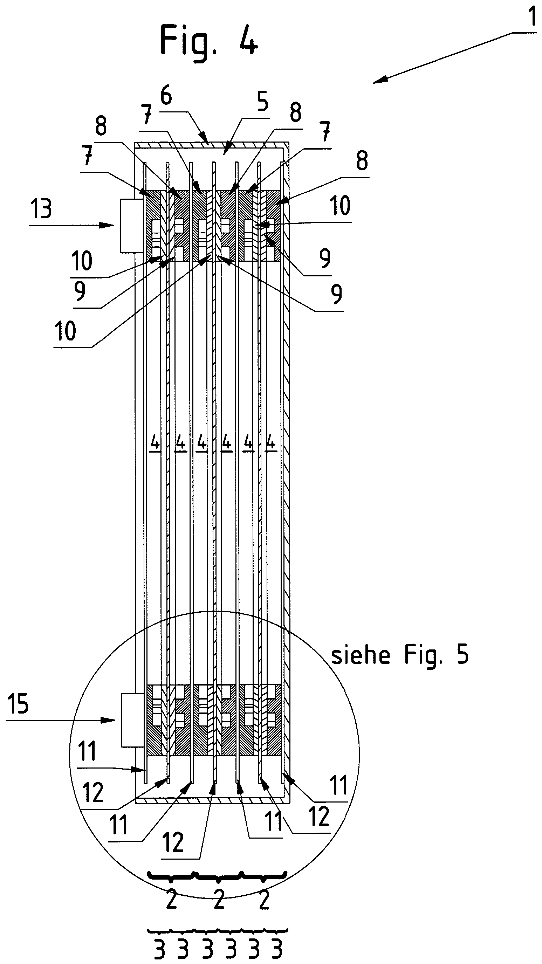

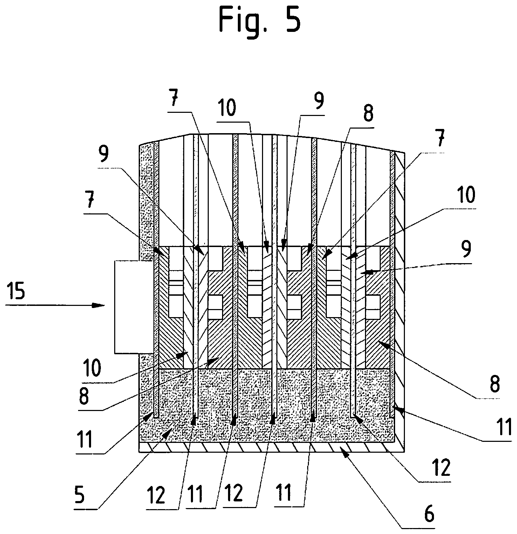

In der Fig. 4 ist ein erfindungsgemäßer Zellstack 1 in einer Schnittansicht dargestellt. Der Zellstack 1 umfasst drei Zellen 2 mit jeweils zwei Halbzellen 3. Die jeweils zwei Halbzellinnenräume 4 je Zelle werden von vier Zellrahmenelementen 7, 8, 9, 10 umschlossen. Die Halbzelleninnenräume 4 werden zum nächsten Halbzelleninnenraum der gleichen Zelle mit einer Membran 12 abgetrennt. Die Halbzelleninnenräume 4 werden zum nächsten Halbzelleninnenraum einer anderen Zelle mit einer Elektrode 11 abgetrennt. Zur Versorgung der jeweiligen Halbzellen mit Elektrolytlösungen, sind in den Zellrahmenelementen 7, 8, 9, 10 senkrecht zu den Halbzellinnenräumen Bohrungen 13, 14, 15, 16 vorgesehen. Die Zellrahmenelemente 7 und 8 sowie 9 und 10 sind dabei identisch. Die Zellrahmenelemente sind dabei immer so angeordnet, dass in jeder Zelle 2 die zwei Halbzelleninnenräume mit jeweils unterschiedlichen Elektrolyten versorgt werden. Dazu werden zur Versorgung der positiven Halbzelle der Zuflusskanal 13 und der Abflusskanal 15, sowie zur Versorgung der negativen Halbzelle der Zuflusskanal 14 und der Abflusskanal 16 genutzt. Alle Zellrahmenelemente 7, 8, 9, 10 sowie sämtliche benötigten Elektroden 11 und Membrane 12 werden dabei im Gussgehäuse 6 platziert. Der Zwischenraum 5 zwischen dem Gussgehäuse 6 und den sämtlichen Stackkomponenten ist umlaufend und wird mit dem Gussmedium aufgefüllt. Das Gussmedium dichtet somit mögliche Spalte zwischen den Zellrahmenelementen 7, 8, 9, 10, den Elektroden 11 und/oder den Membrane 12 flüssigkeitsdicht nach außen hin ab. Zusätzlich werden dadurch mögliche Verbindungen zwischen einem positiven und einem negativen Halbzellinnenraum flüssigkeitsdicht abgeschnitten. Fig. 5 zeigt eine Detailansicht des Zwischenraums 5 des in Fig. 4 im gesamten Schnitt dargestellten Zellstacks.

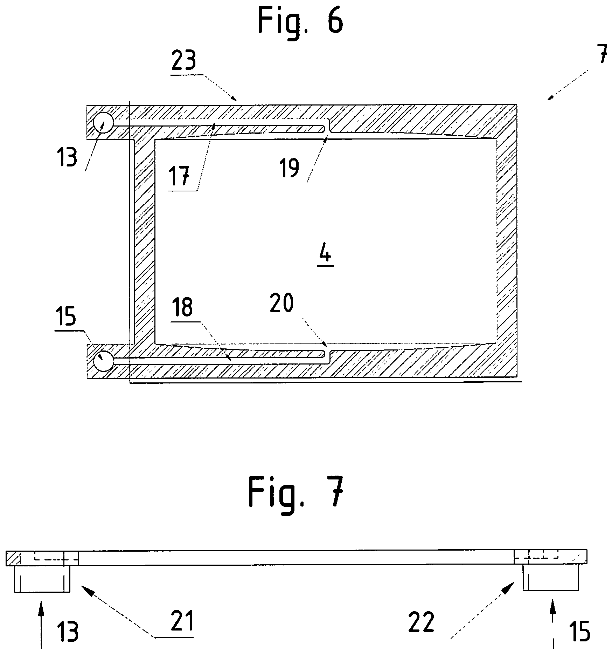

In der Fig. 6 ist ein erstes Zellrahmenelement 7, 8 in Draufsicht dargestellt. Die senkrecht zum Halbzellinnenraum 4 verlaufenden Kanäle 13, 14, 15, 16 besitzen dabei Verbindungskanäle 17,18 zu den Öffnungen 19, 20 an zwei Schmalseiten des Zellinnenraums um diesen mit einer flüssigen Elektrolytlösung zu versorgen. Die Versorgungskanäle 13, 14, 15, 16 sind dabei vom Hauptvolumenkörper 23 des Zellstacks abgesetzt, um seitlich an den Zellrahmenelementen der gegenteilig gepolten Halbzellen vorbei zu führen. Dadurch wird dem Gussmedium ermöglicht, den Versorgungskanal, der von Ausbuchtungen 21, 22 der Zellrahmenelemente selbst gebildet wird, gesamtheitlich zu umschließen und damit mögliche Spalte an den Verbindungsstellen abzudichten. Fig. 7 zeigt dazu ein Zellrahmenelement in der Seitenansicht, bei dem die Ausbuchtungen 21, 22 klar dargestellt sind.

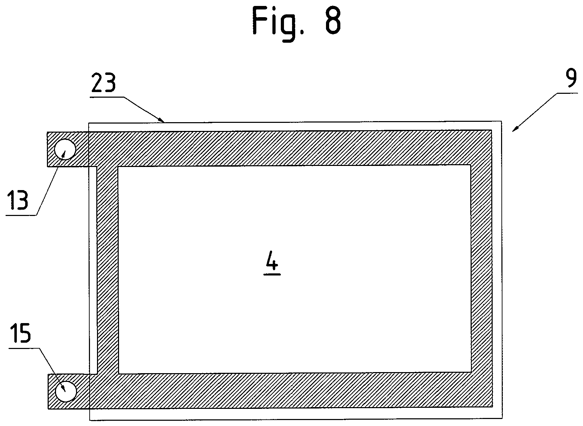

In Fig. 8 ist ein zweites Zellrahmenelement 9, 10 dargestellt. Auch hier sind Bohrungen für die Versorgungskanäle 13, 14, 15, 16 vorhanden, die fluchtend zu den Bohrungen in den Zellrahmenelementen 7, 9 ausgeführt ist. Diese Zellrahmenelemente 8, 10 haben die Aufgabe, die Verbindungskanäle 17, 18 und deren Öffnungen 19, 20 senkrecht zum Halbzellinnenraum 4 abzudecken und damit flüssigkeitsdicht zu verschließen.

Bei einer alternativen, nicht dargestellten Ausgestaltung des Zellrahmenelements können die Zellrahmenelemente auch so ausgestaltet sein, dass die Funktion der Zellrahmenelemente des Typs 7, 8 und des Typs 9, 10 von einem einzigen Zellrahmenelement ausgeführt werden. Damit wäre nur ein Zellrahmenelement pro Halbzelle notwendig.

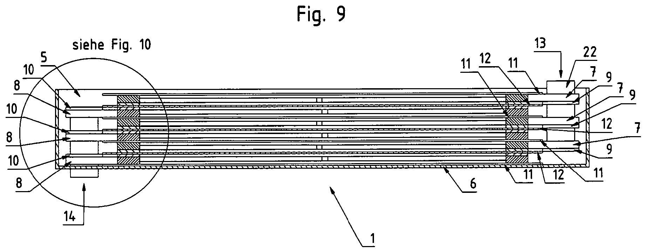

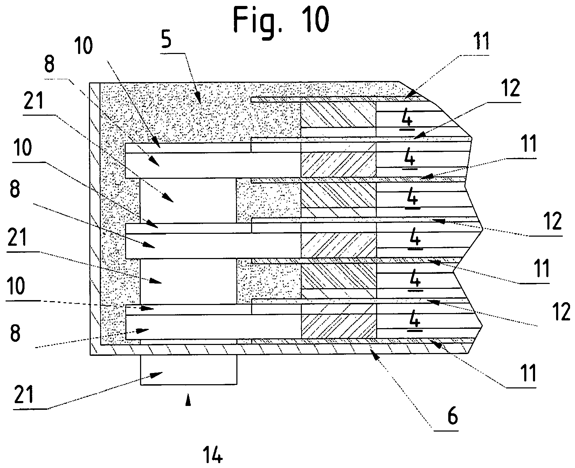

Fig. 9 und Fig. 10 zeigt den bereits beschriebenen Zellstack aus Fig. 4 in einer Draufsicht. Deutlich zu erkennen ist hier wieder der umlaufende Spalt 5 zwischen dem Gussgehäuse 6 und den sämtlichen Stackkomponenten.

## Patentansprüche

1. Zelle (2) einer Redox-Flow-Batterie, mit wenigstens zwei Zellrahmenelementen (7, 8, 9, 10), einer Membran (12) und zwei Elektroden (11), wobei das wenigstens eine Zellrahmenelement (7, 8, 9, 10), die Membran (12) und die zwei Elektroden (11) zwei voneinander getrennte Halbzellinnenräume (4) umschließen, wobei in den wenigstens zwei Zellrahmenelementen (7, 8, 9, 10) wenigstens vier separate Versorgungskanäle (13, 14, 15, 16) so vorgesehen sind, dass die beiden Halbzellinnenräume (4) von unterschiedlichen Elektrolytlösungen durchströmt werden können, und wobei die Zelle (2) mit Ausnahme der wenigsten vier separaten Versorgungskanäle (13, 14, 15, 16) flüssigkeitsdicht ausgebildet ist, worin die wenigstens zwei Zellrahmenelemente (7, 8, 9, 10), die beiden Elektroden (11) und die Membran (12) in einem Gussgehäuse (6) platziert werden und der Spalt zwischen den wenigstens zwei Zellrahmenelementen (7, 8, 9, 10), den beiden Elektroden (11) und der Membran (12) mit einem flüssigen Gussmedium aufgefüllt wird und damit alle genannten Komponenten miteinander flüssigkeitsdicht vergossen werden, worin jedes Zellrahmenelement (7, 8, 9, 10) genau zwei Bohrungen, Aussparungen und/oder Ausbuchtungen für die separaten Versorgungskanäle (13, 15 oder 14, 16) hat,
**dadurch gekennzeichnet,**
**dass** sich die Bohrungen, Aussparungen und/oder Ausbuchtungen außerhalb des Hauptvolumenkörpers der Zelle (2) befinden.

2. Zelle nach Anspruch 1, **dadurch gekennzeichnet, dass** das Gussmedium ein flüssiger und elektrisch isolierender Kunststoff ist, vorzugsweise ein Duroplast oder ein Thermoplast, der durch einen chemischen Prozess und/oder Wärmeeinwirkung aushärtbar ist.

3. Zelle nach Anspruch 1 oder 2, **dadurch gekennzeichnet, dass** die wenigstens zwei Zellrahmenelemente (7, 8, 9, 10), die Elektroden (11), die Membrane (12) und/oder das Gussgehäuse aus Kunststoff und/oder einem Kunststoff beinhaltendem Material gebildet ist.

4. Zelle nach Anspruch 3, **dadurch gekennzeichnet, dass** der Kunststoff ein Thermoplast, vorzugsweise ein nicht polyolefiner Thermoplast, wie etwa Polyvinylchlorid (PVC), Polyamid (PA), Polyphenylensulfid (PPS) und/oder Polyetheretherketon (PEEK) ist.

5. Zelle nach einem der Ansprüche 1 bis 4, **dadurch gekennzeichnet, dass** die wenigstens zwei Zellrahmenelemente (7, 8, 9, 10), die Elektroden (11) und/oder die Membrane (12) mit dem Gussgehäuse (6) dauerhaft gefügt sind.

6. Zellstack (1) einer Redox-Flow-Batterie, **dadurch gekennzeichnet, dass** wenigstens eine Zelle (2) nach einem der Ansprüche 1 bis 5 vorgesehen ist.

7. Zellstack (1) nach Anspruch 6, **dadurch gekennzeichnet, dass** sich die Bohrungen, Aussparungen und/oder Ausbuchtungen außerhalb des Hauptvolumenkörpers des Zellstacks (23) befinden.

8. Zellstack nach Anspruch 7, **dadurch gekennzeichnet, dass** wenigstens ein Zellrahmenelement (7, 8, 9, 10) Ausbuchtungen (21, 22) besitzt, die fluchtend zu den Bohrungen und Ausbuchtungen des nächsten Zellrahmenelements, das ein identisch gepolten Zellinnenraum umschließt, ausgeführt sind, um bei einem Stapeln der Zellen zu einem Zellstack die Versorgungskanäle (13, 14, 15, 16) bereitstellt

## Claims

1. Cell (2) of a redox flow battery, having at least two cell frame elements (7, 8, 9, 10), a membrane (12), and two electrodes (11), wherein the at least one cell frame element (7, 8, 9, 10), the membrane (12), and the two electrodes (11) enclose two half-cell interior spaces (4) which are separated from one another, wherein, in the at least two cell frame elements (7, 8, 9, 10), at least four separate supply ducts (13, 14, 15, 16) are provided in such a way that different electrolyte solutions can flow through the two half-cell interior spaces (4), and wherein, aside from the at least four separate supply ducts (13, 14, 15, 16), the cell (2) is liquid tight, wherein the at least two cell frame elements (7, 8, 9, 10), the two electrodes (11), and the membrane (12) are placed in a cast housing (6) and the gap between the at least two cell frame elements (7, 8, 9, 10), the two electrodes (11) and the membrane (12) is filled with a liquid casting medium, as a result of which all the mentioned components are cast together in a liquid-tight manner, wherein each cell frame element (7, 8, 9, 10) has exactly two bores, recesses and/or bulges for the separate supply ducts (13, 15 or 14, 16); **characterised in that** the bores, recesses and/or bulges are located outside the main volume body of the cell.

2. Cell according to Claim 1, **characterised in that** the casting medium is a liquid and electrically insulating plastic, preferably a Duroplast or a thermoplastic, which can be cured by means of a chemical process and/or under the action of heat.

3. Cell according to Claim 1 or 2, **characterised in that** the at least two cell frame elements (7, 8, 9, 10), the electrodes (11), the membrane (12) and/or the cast housing are made of plastic and/or a plastic-containing material.

4. Cell according to Claim 3, **characterised in that** the plastic is a thermoplastic, preferably a non-polyolefin thermoplastic, such as polyvinyl chloride (PVC), polyamide (PA), polyphenylene sulphide (PPS) and/or polyetheretherketone (PEEK).

5. Cell according to any one of Claims 1 to 4, **characterised in that** the at least two cell frame elements (7, 8, 9, 10), the electrodes (11) and/or the membrane (12) are permanently joined to the cast housing (6).

6. Cell stack (1) of a redox flow battery, **characterised in that** at least one cell (2) according to any one of Claims 1 to 5 is provided.

7. Cell stack (1) according to claim 6, **characterised in that** the bores recesses and/or bulges are located outside the main volume body of the cell stack (23).

8. Cell stack according to Claim 7, **characterised in that** at least one cell frame element (7, 8, 9, 10) has bulges (21, 22) which are aligned with the bores and bulges of the next cell frame element, which encloses an identically poled cell interior space, in order to provide the supply ducts (13, 14, 15, 16) when the cells are stacked to form a cell stack.

## Revendications

1. Élément (2) d'une batterie à flux redox, comprenant au moins deux parties de cadre d'élément (7, 8, 9, 10), une membrane (12) et deux électrodes (11), dans lequel ladite au moins une partie de cadre d'élément (7, 8, 9, 10), la membrane (12) et les deux électrodes (11) délimitent deux demi-espaces intérieurs d'élément (4) séparés l'un de l'autre, dans lequel il est prévu dans lesdites au moins deux parties de cadre d'élément (7, 8, 9, 10) au moins quatre canaux d'alimentation séparés (13, 14, 15, 16), de sorte que les deux demi-espaces intérieurs d'élément (4) peuvent être traversés par différentes solutions d'électrolyte, et dans lequel l'élément (2), à l'exception desdits au moins quatre canaux d'alimentation séparés (13, 14, 15, 16), est conçu pour être étanche aux liquides, dans lequel lesdites au moins deux parties de cadre d'élément (7, 8, 9, 10), les deux électrodes (11) et la membrane (12) sont placées dans un boîtier moulé (6) et l'interstice entre lesdites au moins deux parties de cadre d'élément (7, 8, 9, 10), les deux électrodes (11) et la membrane (12) est rempli d'un milieu d'encapsulation liquide et ainsi tous lesdits composants sont encapsulés ensemble de manière étanche aux liquides, dans lequel chaque partie de cadre d'élément (7, 8, 9, 10) comporte exactement deux orifices, évidements et/ou renflements pour les canaux d'alimentation séparés (13, 15 ou 14, 16),
**caractérisé en ce que**
les orifices, évidements et/ou renflements sont situés à l'extérieur du corps de volume principal de l'élément (2).

2. Élément selon la revendication 1, **caractérisé en ce que** le milieu d'encapsulation est une matière plastique liquide et électriquement isolante, de préférence un matériau thermodurcissable ou thermoplastique, qui est durcissable par un processus chimique et/ou par l'action de la chaleur.

3. Élément selon la revendication 1 ou 2, **caractérisé en ce que** lesdites au moins deux parties de cadre d'élément (7, 8, 9, 10), les électrodes (11), la membrane (12) et/ou le boîtier moulé sont formés de matière plastique et/ou d'un matériau contenant une matière plastique.

4. Élément selon la revendication 3, **caractérisé en ce que** la matière plastique est un matériau thermoplastique, de préférence un matériau thermoplastique non polyoléfinique, tel que le chlorure de polyvinyle (PVC), le polyamide (PA), le sulfure de polyphénylène (PPS) et/ou la polyétheréthercétone (PEEK).

5. Élément selon l'une des revendications 1 à 4, **caractérisé en ce que** lesdites au moins deux parties de cadre d'élément (7, 8, 9, 10), les électrodes (11) et/ou la membrane (12) sont reliées de manière permanente au boîtier moulé (6).

6. Empilement d'éléments (1) d'une batterie à flux redox, **caractérisé en ce qu'**il est prévu au moins un élément (2) selon l'une des revendications 1 à 5.

7. Empilement d'éléments (1) selon la revendication 6, **caractérisé en ce que** les orifices, évidements et/ou renflements sont situés à l'extérieur du corps de volume principal de l'empilement d'éléments (23).

8. Empilement d'éléments selon la revendication 7, **caractérisé en ce qu'**au moins une partie de cadre d'élément (7, 8, 9, 10) présente des renflements (21, 22) qui sont conçus pour être alignés avec les orifices et les renflements de la partie de cadre d'élément suivante, qui délimite un espace intérieur d'élément de même polarité afin de fournir les canaux d'alimentation (13, 14, 15, 16) lorsque les éléments sont empilés pour former un empilement d'éléments.
